(19) Europäisches Patentamt
European Patent Office
Office européen des brevets

(11) **EP 4 455 332 A1**

(12) **EUROPEAN PATENT APPLICATION**
published in accordance with Art. 153(4) EPC

(43) Date of publication:
**30.10.2024 Bulletin 2024/44**

(21) Application number: **22911901.1**

(22) Date of filing: **20.12.2022**

(51) International Patent Classification (IPC):
*C22C 38/02* (2006.01)   *C22C 38/04* (2006.01)
*C22C 38/06* (2006.01)   *C22C 38/14* (2006.01)
*C22C 38/00* (2006.01)   *C22C 38/34* (2006.01)
*C22C 38/12* (2006.01)   *C21D 8/12* (2006.01)
*H01F 1/147* (2006.01)

(52) Cooperative Patent Classification (CPC):
**C21D 8/12; C22C 38/00; C22C 38/02; C22C 38/04;
C22C 38/06; C22C 38/12; C22C 38/14;
C22C 38/34; H01F 1/147**

(86) International application number:
**PCT/KR2022/020903**

(87) International publication number:
**WO 2023/121268 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 KR 20210184603**

(71) Applicant: **POSCO Co., Ltd
Pohang-si, Gyeongsangbuk-do 37859 (KR)**

(72) Inventors:
• **HONG, Jaewan
  Pohang-si, Gyeongsangbuk-do 37859 (KR)**
• **JOO, Hyung Don
  Pohang-si, Gyeongsangbuk-do 37859 (KR)**
• **PARK, Junesoo
  Pohang-si, Gyeongsangbuk-do 37859 (KR)**

(74) Representative: **Zech, Stefan Markus
Meissner Bolte
Patentanwälte Rechtsanwälte
Partnerschaft mbB
P.O. Box 860624
81633 München (DE)**

(54) **NON-ORIENTED ELECTRICAL STEEL SHEET AND METHOD FOR MANUFACTURING SAME**

(57)     A non-oriented electrical steel sheet according to one embodiment of the present invention comprises, by wt%, 1.4-3.0 % of Si; 0.001-1.5 % of Mn; and 0.001-0.2 % of Al, with the remainder of Fe and inevitable impurities, wherein a thickness deviation in the direction perpendicular to a rolling direction is 1.5 $\mu$m or less per 5 mm length, and a thickness derivation in the rolling direction is 10 $\mu$m or less per 1000 m length.

EP 4 455 332 A1

**Description**

**[Technical Field]**

An exemplary embodiment of the present disclosure relates to a non-oriented electrical steel sheet and a method for manufacturing the non-oriented electrical steel sheet. In detail, an exemplary embodiment of the present disclosure relates to a non-oriented electrical steel sheet that can reduce a sheet thickness deviation even without performing hot rolled plate annealing by performing acid pickling a plurality of times after hot rolling in which a final pass reduction ratio is appropriately adjusted, and a method for manufacturing the non-oriented electrical steel sheet.

**[Background Art]**

A motor or a generator is an energy conversion apparatus that converts electrical energy into mechanical energy or mechanical energy into electrical energy, and as regulation on environment conservation and saving energy is recently enhanced, the demand for improvement of the efficiency of motors or generators is increasing. Accordingly, it is increasingly required to develop materials having more excellent characteristics for non-oriented electrical steel sheets that are used as the material of the steel core of a motor, a generator, a small transformer, etc.

In a motor or a generator, energy efficiency is the ratio of input energy and output energy, and in order to improve efficiency, finally, it is important to how much reduce the energy loss such as iron loss, copper loss, and mechanical loss that is generated in an energy conversion process. The iron loss and the magnetic flux density of generally known non-oriented electrical steel sheets influence the iron loss and the copper loss of motors. Further, the surface characteristic of electrical steel sheets may cause additional iron loss, mechanical loss, or the like due to a machining error that may be generated when electrical steel sheets are machined, a shape difference that may be generated when pieces of electrical steel sheets are stacked, etc. Accordingly, in order to improve the energy efficiency of motors, it would be necessary not only to develop a non-oriented electrical steel sheet having an excellent magnetic property, but also to develop a non-oriented electrical steel sheet having an excellent surface characteristic.

As an efficient method for reducing the iron loss of non-oriented electrical steel sheets, there is a method of increasing the added amounts of Si, Al, and Mn that are elements having high resistivity. However, an increase in added amount of Si, Al, and Mn increases the resistivity of steel and reduces Eddy current loss of the iron loss of non-oriented electrical steel sheets, whereby there is an effect of reducing iron loss, but even though the added amounts are increased, iron loss is not necessarily decreased in proportion to the added amounts. Further, in contrast, an increase in added amount of alloy elements deteriorates magnetic flux density, so it is not easy to secure excellent magnetic flux density while decreasing iron loss even though the component system and the manufacturing process are optimized. However, improving a texture is a method that can improve both of iron loss and magnetic flux index without scarifying any one of them, and the more the {100} and {110} textures that are advantageous for a magnetic property and the less the {111} and {112} textures that are disadvantageous for a magnetic property, the more the iron loss and magnetic flux density can be improved. To this end, for the purpose of improving tissues in non-oriented electrical steel sheets having an excellent magnetic property, a technology of improving textures by performing a hot rolled plate annealing process in the step before cold rolling of a hot rolled plate after hot rolling of a slab is widely used. However, this method also causes an increase in manufacturing cost accompanying addition of a process, that is, a hot rolled plate annealing process and involves problems such as deterioration of the performance of cold rolling when grains coarsen because it performs hot rolled plate annealing. Accordingly, if it is possible to manufacture a non-oriented electrical steel sheet having an excellent magnetic property without performing a hot rolled plate annealing process, that is, having less deterioration of a magnetic property even without performing hot rolled plate annealing, it is possible to reduce the manufacturing cost and also solve the problem with productivity accompanying a hot rolled plate annealing process.

However, when hot rolled plate annealing is omitted, not only a temperature region in which phase transformation may occur is generated, but also differences in configuration of an oxide layer, the degree of dynamic recrystallization in hot rolling, etc. are generated, depending on the added amount of components such as Si, Al, and Mn. This variation causes degradation of the surface characteristic of non-oriented electrical steel sheets, and accordingly, greatly influences the efficiency of motors.

**[Disclosure]**

**[Technical Problem]**

An exemplary embodiment of the present disclosure provides a non-oriented electrical steel sheet and a method for manufacturing the non-oriented electrical steel sheet. In detail, an exemplary embodiment provides a non-oriented electrical steel sheet that can reduce a sheet thickness deviation even without performing hot rolled plate annealing by performing acid pickling a plurality of times after hot rolling in which a final pass reduction ratio is appropriately adjusted, and a method for manufacturing the non-oriented electrical steel sheet.

**[Technical Solution]**

A non-oriented electrical steel sheet according to an exemplary embodiment of the present disclosure includes: by wt%, Si: 1.4 to 3%, Mn: 0.001 to 1.5%, and Al: 0.001 to 0.2%, with the remainder of Fe and inevitable impurities, in which a thickness deviation that is generated in a direction perpendicular to a rolling direction is 1.5μm or less per length of 5mm, and a thickness deviation that is generated in the rolling direction is 10μm or less per length of 1000m.

The non-oriented electrical steel sheet according to an exemplary embodiment may satisfy the following Formula 1.

[Formula 1]

$$1.1575 \times ([Si]+[Al])-1.6722 \leq [Mn] \leq 1.1575 \times ([Si]+[Al])-1.4722$$

(In Formula 1, [Si], [Al], and [Mn] mean contents (wt%) of Si, Al, and Mn, respectively.)

The non-oriented electrical steel sheet according to an exemplary embodiment of the present disclosure may further include one or more kinds of P: 0.1 wt% or less, C: 0.005 wt% or less, S: 0.01 wt% or less, N: 0.005 wt% or less, Ti: 0.005 wt% or less, and Sb: 0.001 to 0.08 wt%.

The non-oriented electrical steel sheet according to an exemplary embodiment of the present disclosure may further include one or more kinds of Cr: 0.010 to 0.150 wt%, Sn: 0.003 to 0.080 wt%, and Cu: 0.01 to 0.20 wt%.

The non-oriented electrical steel sheet according to an exemplary embodiment of the present disclosure may further include one or more kinds of Mo: 0.03 wt% or less, B: 0.0050 wt% or less, Ca: 0.0050 wt% or less, and Mg: 0.0050 wt% or less.

The thickness of the steel sheet may be 0.3 to 0.7mm.

A method for manufacturing a non-oriented electrical steel sheet according to an exemplary embodiment of the present disclosure includes: manufacturing a hot rolled plate by hot-rolling a slab including, by wt%, Si: 1.4 to 3.0%, Mn: 0.001 to 1.5%, and Al: 0.001 to 0.2%, with the remainder of Fe and inevitable impurities; acid-pickling the hot rolled plate two to four times; and manufacturing a cold rolled plate by cold-rolling the acid-pickled hot rolled plate.

The manufacturing of a hot rolled plate may include rough rolling of the slab and finish rolling, and the finish rolling may perform rolling through passes of a plurality of times and a reduction ratio of a final pass of the passes of a plurality of times is 17% or less.

The method may further include heating the slab for 0.1 to 3 hours within a temperature range of 1100 to 1250°C before the manufacturing of a hot rolled plate.

A reduction ratio of an initial pass of the passes of a plurality of times may be 30% or more.

A ratio of the reduction ratio of the initial pass to the reduction ratio of the final pass may be 2.45 to 3.55 in the finish rolling.

The finish rolling may be performed at 850°C to 950°C.

The manufacturing of a hot rolled plate may further include winding at a temperature of 800°C or less after the finish rolling.

The acid pickling may be performed by immersing the hot rolled plate in a solution with hydrochloric acid of 3 to 22 wt% for 15 seconds to 200 seconds at each time.

The method may further include removing an acid-pickling solution from a surface of the steel sheet between acid pickling in the acid pickling.

The method may be performed at a temperature of 300°C or lower until the manufacturing of a cold rolled plate is finished after the manufacturing of a hot rolled plate.

The method may further include annealing the cold rolled plate after the manufacturing of a cold rolled plate.

**[Advantageous Effects]**

The non-oriented electrical steel sheet according to an exemplary embodiment of the present disclosure can reduce a thickness deviation even without performing annealing of a hot rolled plate and this contributes to improving a fill factor, so it consequently is possible to improve the efficiency of a motor that uses the non-oriented electrical steel sheet.

**[Mode for Invention]**

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present disclosure.

Terminologies used herein are to mention only a specific exemplary embodiment, and do not to limit the present disclosure. Singular forms used herein include plural forms as long as phrases do not clearly indicate an opposite meaning. The meaning "including" used in the present specification concretely indicates specific properties, areas, integer numbers, steps, operations, elements, and/or components, and is not to exclude presence or addition of other specific properties, areas, integer numbers, steps, operations, elements, and/or components thereof.

When a part is referred to as being "above" or "on" other parts, it may be directly above or on other parts, or other parts may be included in between. In contrast, when a part is referred to as being "directly above" another part, no other part is involved in between.

All terms including technical terms and scientific terms used herein have the same meaning as the meaning generally understood by those skilled in the art to which the present disclosure pertains unless defined otherwise. Terms defined in commonly used dictionaries are additionally interpreted as having meanings consistent with related technical literature and currently disclosed content, and are not interpreted in ideal or very formal meanings unless defined.

In addition, unless otherwise specified, % means wt%, and 1 ppm is 0.0001 wt%.

In an exemplary embodiment of the present disclosure, further including additional elements means that the remainder of iron (Fe) is replaced and included as much as the additional amount of the additional elements.

Hereinafter, an exemplary embodiment of the present disclosure will be described in detail so that a person of ordinary skill in the art to which the present disclosure pertains can easily implement the present disclosure. As those skilled in the art would realize, the described embodiments may be modified in various different ways, all without departing from the spirit or scope of the present disclosure.

An exemplary embodiment can reduce a sheet thickness deviation even without performing hot rolled plate annealing by performing acid pickling a plurality of times after hot rolling in which a final pass reduction ratio is appropriately adjusted.

A non-oriented electrical steel sheet according to an exemplary embodiment of the present disclosure includes, by wt%, Si: 1.4 to 3.0%, Mn: 0.001 to 1.5%, and Al: 0.001 to 0.2%, with the remainder of Fe and inevitable impurities.

First, the reason of limiting the components of the non-oriented electrical steel sheet is described.

Si: 1.4 to 3.0 wt%

Silicon (Si) is a main element that is added to reduce iron loss and Eddy current loss by increasing resistivity of steel and Si is an element involved with phase transformation in hot rolling as a representative Ferrite stabilization element. When Si is added too little, a problem that iron loss is degraded is generated. Accordingly, it is advantageous to increase the content of Si in terms of iron loss, but when Si is excessively added, the magnetic flux density greatly decreases, so a problem may be generated in workability. Accordingly, it is possible to include Si in the range described above. In more detail, it is possible to include Si of 1.4 to 2.6 wt%.

Mn: 0.001 to 1.500 wt%

Manganese (Mn) is an element reducing iron loss by increasing resistivity together with Si, Al, etc., and is an element that produces a sulfide, induces phase transformation in hot rolling by providing Austenite stabilization, and improves textures. When Mn is added too little, sulfides are finely precipitated, so it may deteriorate the magnetic property. In contrast, when Mn is excessively added, it causes production of a {111} texture that is disadvantageous for a magnetic property, so magnetic flux density may decrease. Accordingly, it is possible to include Mn in the range described above. In more detail, it is possible to include Mn of 0.30 to 1.40 wt%.

Al: 0.001 to 0.200 wt%

Aluminum (Al) plays an important role of reducing iron loss by increasing resistivity together with Si and improves rolling performance or increases workability in cold rolling. When Al is added too little, it is not effective in reduction of high-frequency iron loss and the precipitation temperature of AlN decreases, so nitrides may be finely produced and the magnetic property may be deteriorated. In contrast, when Al is excessively added, nitrides are excessively produced, so the magnetic property is deteriorated, and problems are generated in all of processes such as steelmaking and continuous casting, whereby productivity may be greatly deteriorated. Further, Al is a Ferrite stabilization element and influences phase transformation in hot rolling. Accordingly, it is possible to include Al in the range described above. In more detail, it is possible to include Al of 0.001 to 0.05 wt%. In more detail, it is possible to include Al of 0.001 to 0.02 wt%.

The non-oriented electrical steel sheet according to an exemplary embodiment of the present disclosure can satisfy the following Formula 1.

[Formula 1]

$$1.1575 \times ([Si]+[Al])-1.6722 \leq [Mn] \leq 1.1575 \times ([Si]+[Al])-1.4722$$

(In Formula 1, [Si], [Al], and [Mn] mean the contents (wt%) of Si, Al, and Mn, respectively.)

When Formula 1 is satisfied, Si, Al, and Mn that are elements influencing a phase fraction are adjusted, and the magnetic property can be further improved.

The non-oriented electrical steel sheet according to an exemplary embodiment of the present disclosure may further include one or more kinds of P: 0.1 wt% or less, C: 0.005 wt% or less, S: 0.01 wt% or less, N: 0.005 wt% or less, Ti: 0.005 wt% or less, and Sb: 0.001 to 0.08 wt%.

P: 0.100 wt% or less

Phosphorous (P) not only serve to increase resistivity of a material, but also to increase resistivity and reducing iron loss by improving textures by segregating in a grain boundary, so it can be additionally added. However, the added amount of P is too much, it causes production of textures that are disadvantageous for the magnetic property, so there is no effect of improving textures. Further, P excessively segregates in a grain boundary, so rolling performance and workability are deteriorated, whereby production may become difficult. Accordingly, it is possible to add P in the range described above. In more detail, it is possible to include P of 0.001 to 0.050 wt%.

C: 0.005 wt% or less

Carbon (C) deteriorates the magnetic property by producing carbides by bonding with Ti, Nb, etc., and when a final product is processed into an electric product and then used, iron loss is increased by magnetic aging, so the efficiency of the electric device can be reduced. In more detail, it is possible to further include C of 0.0005 to 0.0020 wt%.

S: 0.0100 wt% or less

Sulfur (S) weakens iron loss by suppressing grain growth by producing fine sulfides in a base material, so it is preferable to add sulfur as little as possible. When a large amount of S is included, it may produce deposition by bonding with Mn, etc. or may cause high temperature brittleness in hot rolling. Accordingly, it is possible to further include S of 0.0100 wt% or less. In detail, it is possible to further include S of 0.0010 to 0.0050 wt% or less.

N: 0.0050 wt% or less

Nitrogen (N) not only produces fine and long deposition in a base material by bonding with Al, Ti, etc., but also weakens iron loss, for example, by suppressing grain growth by producing fine nitrides by bonding with other impurities, so it is preferable to contain a small amount of N. In exemplary embodiment of the present disclosure, it is possible to further include N of 0.0050 wt% or less. In more detail, it is possible to further include N of 0.0010 to 0.0050 wt%. In more detail, it is possible to further include N of 0.0010 to 0.0030 wt%.

Ti: 0.0050 wt% or less

Titanium (Ti) is an element having intensive tendency to produce deposition in steel and suppresses grain growth by producing fine carbides or nitrides in a base material, so the more the Ti is added, the more the carbides and nitrides are produced, thereby deteriorating the magnetic force, for example, by deteriorating steel. In exemplary embodiment of the present disclosure, it is possible to further include Ti of 0.0050 wt% or less. In more detail, it is possible to further include T of 0.0005 to 0.0030 wt% or less.

Sb: 0.001 to 0.080 wt%

Antimony (Sb) serves to improve textures of a material and suppresses surface oxidation by segregating in a grain boundary and a surface, so it may be additionally added to improve the magnetic property. When Sb is excessively added, segregation a grain boundary becomes excessive, so the surface quality is degraded and hardness is increased, whereby rolling performance may be deteriorated due to breakage of cold rolled sheets and a coating layer may come off after final annealing. Accordingly, it is possible to add Sb in the range described above. However, when the added amount of Sb is too small, it is difficult to expect the effects of improvement of textures and suppression of surface oxidation. In more detail, it is possible to include Sb of 0.01 to 0.07 wt%.

Cr: 0.010 to 0.150 wt%, Sn: 0.003 to 0.080 wt%, Cu: 0.01 to 0.20 wt%

Segregation is generated on a surface when the annealing condition of Chromium (Cr) and tin (Sn) is appropriately adjusted. Segregation is appropriately generated only when Cr, Sn, and Sb are included in the range described above. When the contents is smaller than the range, there is no effect of surface segregation, and when the contents are too large, brittleness of a material is increase, so a problem may be generated. In more detail, it is possible to further include one or more kinds of Cr: 0.010 to 0.100 wt%, Sn: 0.005 to 0.050 wt%, and Cu: 0.01 to 0.20 wt%.

Copper (Cu) serves to produce sulfides together with Mn. When Cu is further added and is added too less, CuMnS is finely precipitated, whereby the magnetic property may be degraded. When Cu is excessively added, high temperature brittleness is generated, so cracks may be formed in continuous casting or hot rolling. In more detail, it is possible to include Cu of 0.01 to 0.10 wt%.

The non-oriented electrical steel sheet according to an exemplary embodiment of the present disclosure may further include one or more kinds of Mo: 0.03 wt% or less, B: 0.0050 wt% or less, Ca: 0.0050 wt% or less, and Mg: 0.0050 wt% or less.

These may produce fine carbides, nitrides, or sulfides and have a bad influence on the magnetic property by reacting with C, S, and N that are inevitably included, so the upper limits can be determined, as described above.

The remainder includes Fe and inevitable impurities. Inevitable impurities are impurities that are mixed in a steelmaking step and a manufacturing process of a non-oriented electrical steel sheet and are widely known in the art, so detailed description is omitted. Addition of elements other than the alloy components described above in an exemplary embodiment of the present disclosure is not excluded, and elements may be variously added within the range that is not detrimental to the spirit of the present disclosure. When an additional element is further included, it is included by replacing Fe that is the remainder.

In a non-oriented electrical steel sheet according to an exemplary embodiment, a thickness deviation that is generated in a direction perpendicular to a rolling direction is $1.5\mu m$ or less per length of 5mm, and a thickness deviation that is generated in the rolling direction is $10\mu m$ or less per length of 1000m. In this case, the thickness deviation that is generated in a direction perpendicular to the rolling direction is in the region of 5.0mm $\times$ 5.0mm or more and can be measured by a method of measuring the difference between a minimum value and a maximum value of a single side observed through a confocal microscope. A thickness deviation that is generated in a rolling direction can be measured by a method of measuring the difference between a minimum value and a maximum value of a value measured through an X-ray thickness meter around a plate. In more detail, a thickness deviation that is generated in a direction perpendicular to a rolling direction is 0.5 to $1.1\mu m$ per length of 5mm and a thickness deviation that is generated in the rolling direction is 2 to $8.0\mu m$ per length of 1000m.

The thickness of the steel sheet may be 0.3 to 0.7mm. In more detail, the thickness may be 0.35 to 0.65mm.

A method for manufacturing a non-oriented electrical steel sheet according to an exemplary embodiment includes: manufacturing a hot rolled plate by hot-rolling a slab including, by wt%, Si: 1.4 to 3.0%, Mn: 0.001 to 1.5%, and Al: 0.001 to 0.2%, with the remainder Fe and inevitable impurities; acid washing the hot rolled plate two to four times; and manufacturing a cold rolled plate by cold-rolling the acid-pickled hot rolled plate.

First, a hot rolled plate is manufactured by hot-rolling a slab. The reason of limiting the addition ratio of each composition in a slab is the same as the reason of limiting the compositions of the non-oriented electrical steel sheet, so repeated description is omitted. The compositions of the slab is not substantially changed in the manufacturing process of hot rolling, cold rolling, annealing of a cold rolled plate, etc. to be described below, so the compositions of the slab and the compositions of the non-oriented electrical steel sheet are substantially the same.

The method may further include heating a slab for 0.1 to 3 hours within a temperature range of 1100 to 1250°C before the manufacturing of a hot rolled plate. When the heating temperature of the slab is too high, depositions such as AlN and Mns existing in the slab are re-dissolved and are finely precipitated in hot rolling and annealing, whereby it is possible to suppress grain growth and deteriorate the magnetic property. In detail, the method may further include heating for 0.1 to 2 hours in a temperature range of 1130 to 1200°C.

In the manufacturing of a hot rolled plate, the thickness of the hot rolled plate may be 1.6 to 2.7mm. In detail, the thickness of the hot rolled plate may be 2.0mm to 2.5mm.

The manufacturing of a hot rolled plate includes rough-rolling the slab and finish rolling.

The rough rolling of the slab is a step of manufacturing a bar by rough-rolling the slab. The finish rolling is a step of manufacturing a hot rolled plate by rolling the bar.

The finish rolling performs rolling through passes of a plurality of times. The pass means a process of passing through rolling rolls one time. In an exemplary embodiment of the present disclosure, it is possible to reduce the thickness deviation of the steel sheet by controlling recrystallization and formation of an oxide layer in winding by adjusting a final pass reduction ratio in the finish rolling. In detail, the reduction ratio of the final pass is 17% or less. When the reduction ratio of the final pass is too high, a problem that shape deterioration of a cold rolled plate due to shape deterioration of the hot rolled plate itself is generated may be generated. In more detail, the reduction ratio of the final pass may be 13.0 to 16.5%. In an exemplary - embodiment of the present disclosure, the reduction ratio is calculated by ([steel sheet thickness before reducing] - [steel sheet thickness after reducing])/[steel sheet thickness before reducing].

Meanwhile, the reduction ratio in the initial pass may be 30.0% or more. It is possible to appropriately secure the thickness of a hot rolled plate after a final pass only when securing a reduction ratio in initial final pass. In more detail, the reduction ratio of the initial pass may be 35.0 to 50.0%.

In finish rolling, the ratio of the reduction ratio of the initial pass to the reduction ratio of the final pass may be 2.45 to 3.55. In more detail, the ratio may be 2.75 to 3.45.

The finish rolling may be performed at 850°C to 950°C. In an exemplary embodiment of the present disclosure, the annealing of the hot rolled plate may be omitted, and when the temperature is not appropriately adjusted in the finish rolling, fine tissues existing in the hot rolled plate remain and influence textures. When phase transformation is excessively generated in finish rolling and the grains of the hot-rolled recrystallization tissues are also refined, the improvement effect of textures by strain energy decreases and the magnetic property is consequently greatly deteriorated. In more detail, the finish rolling may be performed at 880°C to 920°C.

The manufacturing of a hot rolled plate may further include winding at a temperature of 800°C or lower after the finish rolling. By appropriately controlling the temperature of the winding, it is possible to contribute to improving the magnetic property by appropriately forming microstructures after annealing of the cold rolled plate. In more detail, the winding temperature may be 650 to 750°C.

In an exemplary embodiment of the present disclosure, the annealing of the hot rolled plate before cold rolling after the manufacturing of a hot rolled plate may be omitted. That is, since cold rolling is also performed at a low temperature at 300°C or less, the cold rolling may be performed at a temperature of 300°C or lower until the manufacturing of a cold rolled plate is finished after the manufacturing of a hot rolled plate. In an exemplary embodiment of the present disclosure, it is possible to reduce the thickness deviation of the steel sheet even though annealing of the hot rolled plate is omitted by adjusting the reduction ratio in the final pass in hot rolling and performing acid pickling two to four times.

Next, the hot rolled plate is pickled with acid two to four times. In the present disclosure, the number of times of acid pickling can be determined by a process of immersing a steel sheet into an acid pickling solution, taking out the steel sheet from the immersion solution, and removing the acid pickling solution remaining on the surface of the steel sheet. The acid pickling solution may be removed using a rinse solution.

The acid pickling may be performed in the manner of immersing the hot rolled plate in a solution with hydrochloric acid of 3.0 to 22.0 wt% for 15 seconds to 200 seconds at each time. When the concentration of the hydrochloric acid is too low or the immersion time is short, the scale existing on the surface of the hot rolled plate may not be sufficiently removed, and when the concentration is too high or the immersion time is long, the surface of the steel sheet may be damaged beyond removal of the scale. In more detail, the acid pickling may be performed in the manner of immersing the hot rolled plate in a solution with hydrochloric acid of 10.0 to 18.0 wt% for 20 seconds to 100 seconds at each time. The concentration of the acid pickling solution means the average concentration to the number of times when acid pickling of a plurality of times exists and the concentration of the acid pickling solution is different at each time.

Next, a cold rolled plate is manufactured by cold-rolling the acid-pickled hot rolled plate. Although a reduction ratio may be differently applied, depending on the thickness of the hot rolled plate, a reduction ratio of 70 to 95% may be applied such that the final thickness becomes 0.3 to 0.7mm. In order to fit to a reduction ratio, it may be possible to perform cold rolling one time or cold rolling two or more times with intermediate annealing therebetween. Cold rolling may be performed through 3 to 7 passes.

The method may further include annealing the cold rolled plate after the manufacturing of a cold rolled plate. The annealing of the cold rolled plate may perform uniform hating at 800 to 1070°C and the uniform heating time may be 10 seconds to 5 minutes. In more detail, uniform heating may be performed at 900 to 1050°C. The annealing of the cold rolled plate may be omitted, if necessary, and when the annealing of the cold rolled plate is added, the magnetic property can be additionally improved. In an exemplary embodiment of the present disclosure, the thickness deviation is not changed before and after the annealing of the cold rolled plate.

After the annealing of the cold rolled plate, iron loss (W15/50) may be 3.50 W/kg or less and the magnetic flux density (B50) may be 1.67T or more. In more detail, iron loss (W15/50) may be 2.50 to 3.50 W/kg and the magnetic flux density (B50) may be 1.67 to 1.80T.

Thereafter, the method may further include forming an insulation layer. The methods of forming an insulation layer are widely known in the field of non-oriented electrical steel sheet, so detailed description is omitted.

Hereinafter, the preferred Example of the present disclosure and Comparative Example will be described. However, the following exemplary embodiment is only an exemplary embodiment of the present disclosure and the present disclosure is not limited to the following exemplary embodiment.

Experimental Example 1

A slab having the compositions shown in the following Table 1 was heated at the temperatures shown in the following Table 2. Thereafter, hot rolling was performed into the thicknesses in Table 2. In this case, the finish rolling temperatures of hot rolling are shown in Table 2, and the initial pass reduction ratio and the final pass reduction ratio in hot rolling finish rolling are shown in Table 2. Winding was performed at the temperatures shown in Table 2 after hot rolling. A hot rolled steel sheet cooled by air was acid-pickled under the acid pickling conditions shown in Table 3 and was then cold-rolled with annealing of a hot rolled plate into 0.5mm omitted. The surface finish of the finally manufactured cold rolled plate is as in Table 3.

The thickness deviation that is generated in a direction perpendicular to the rolling direction is in the region of 1.8mm × 1.8mm or more and was measured as the difference between a minimum value and a maximum value of a single side observed through a confocal microscope. A thickness deviation that is generated in a rolling direction was measured as the difference between a minimum value and a maximum value of a value measured through an X-ray thickness meter around a plate.

## (Table 1)

| Kind of steel | Si | Mn | Al | P | C | S | N | Sb | Satisfying or not Formula 1 |
|---|---|---|---|---|---|---|---|---|---|
| A1 | 1.93 | 0.67 | 0.252 | 0.008 | 0.0017 | 0.0014 | 0.001 | 0.01 | No |
| A2 | 2.10 | 0.20 | 0.373 | 0.025 | 0.0014 | 0.0013 | 0.001 | 0.02 | No |
| A3 | 1.85 | 1.43 | 0.510 | 0.014 | 0.0015 | 0.0013 | 0.001 | 0.03 | No |
| B1 | 1.69 | 0.43 | 0.008 | 0.007 | 0.0016 | 0.0011 | 0.001 | 0.03 | Yes |
| B2 | 1.72 | 0.51 | 0.007 | 0.028 | 0.0004 | 0.0007 | 0.001 | 0.02 | Yes |
| C1 | 1.94 | 0.71 | 0.011 | 0.012 | 0.0019 | 0.0011 | 0.001 | 0.04 | Yes |
| C2 | 1.89 | 0.68 | 0.004 | 0.008 | 0.0013 | 0.0004 | 0.001 | 0.03 | Yes |
| D1 | 2.18 | 0.91 | 0.006 | 0.005 | 0.0012 | 0.0004 | 0.001 | 0.05 | Yes |
| D2 | 2.34 | 1.15 | 0.006 | 0.007 | 0.0019 | 0.0002 | 0.001 | 0.02 | Yes |
| E1 | 2.45 | 1.33 | 0.008 | 0.009 | 0.0009 | 0.0012 | 0.001 | 0.04 | Yes |
| E2 | 2.51 | 1.38 | 0.001 | 0.008 | 0.0009 | 0.0007 | 0.001 | 0.03 | Yes |

(Table 2)

| Remarks | Kind of steel | Heating temperature of slab (°C) | Finish rolling | | | Ratio of reduction ratio of initial pass/final pass | Winding temperature | Thickness of hot rolled plate |
|---|---|---|---|---|---|---|---|---|
| | | | Reduction ratio of initial pass (%) | Reduction ratio of final pass (%) | Temperature (°C) | | | |
| Comparative Example 1 | A1 | 1150 | 47.2 | 14.3 | 882 | 3.301 | 680 | 2.0 |
| Comparative Example 2 | A1 | 1179 | 43.8 | 13.7 | 904 | 3.197 | 720 | 2.3 |
| Comparative Example 3 | A2 | 1153 | 39.2 | 15.7 | 872 | 2.497 | 700 | 2.3 |
| Comparative Example 4 | A2 | 1184 | 48.2 | 13.7 | 907 | 3.518 | 720 | 2.5 |
| Comparative Example 5 | A3 | 1142 | 50.4 | 16.2 | 862 | 3.111 | 680 | 2.3 |
| Comparative Example 6 | A3 | 1192 | 44.3 | 18.4 | 915 | 2.408 | 700 | 2.3 |
| Example 1 | B1 | 1147 | 45.2 | 15.6 | 894 | 2.897 | 680 | 2.3 |
| Example 2 | B1 | 1165 | 41.7 | 14.8 | 901 | 2.818 | 700 | 2.5 |
| Comparative Example 7 | B1 | 1165 | 41.7 | 14.8 | 901 | 2.818 | 700 | 2.5 |
| Comparative Example 8 | B2 | 1153 | 43.7 | 17.1 | 883 | 2.556 | 680 | 2.5 |
| Comparative Example 9 | B2 | 1172 | 39.8 | 15.8 | 904 | 2.519 | 700 | 2.5 |
| Example 3 | C1 | 1145 | 42.7 | 14.8 | 880 | 2.885 | 700 | 2.0 |
| Example 4 | C2 | 1180 | 43.7 | 14.4 | 914 | 3.035 | 720 | 2.5 |
| Example 5 | D1 | 1153 | 48.2 | 14.2 | 887 | 3.394 | 680 | 2.0 |
| Example 6 | D2 | 1165 | 46.0 | 14.5 | 896 | 3.172 | 700 | 2.3 |
| Example 7 | E1 | 1158 | 41.7 | 14.8 | 882 | 2.818 | 680 | 2.0 |
| Example 8 | E2 | 1162 | 43.5 | 15.1 | 890 | 2.881 | 720 | 2.3 |

(Table 3)

| Remarks | Acid pickling | | | Thickness deviation in direction perpendicular to rolling direction(μm) | Thickness deviation in rolling direction(μm) |
|---|---|---|---|---|---|
| | Number of times of acid pickling | Time (sec)/times | Average concentration (%) | | |
| Comparative Example 1 | 4 | 30 | 11.3 | 2.4 | 8.4 |
| Comparative Example 2 | 2 | 45 | 12.8 | 2.8 | 11.8 |
| Comparative Example 3 | 2 | 80 | 13.2 | 3.8 | 6.8 |
| Comparative Example 4 | 1 | 180 | 17.8 | 1.4 | 10.7 |
| Comparative Example 5 | 4 | 40 | 18.3 | 1.8 | 5.4 |
| Comparative Example 6 | 4 | 35 | 10.5 | 2.7 | 8.3 |
| Example 1 | 4 | 15 | 12.7 | 0.8 | 4.7 |
| Example 2 | 4 | 20 | 10.8 | 0.7 | 7.4 |
| Comparative Example 7 | 1 | 200 | 18.5 | 2.1 | 9.8 |
| Comparative Example 8 | 4 | 40 | 13.2 | 1.7 | 7.8 |
| Comparative Example 9 | 5 | 25 | 14.3 | 2.5 | 4.4 |
| Example 3 | 2 | 60 | 16.3 | 0.9 | 4.3 |
| Example 4 | 2 | 50 | 17.2 | 1.1 | 4.7 |
| Example 5 | 4 | 20 | 11 | 0.8 | 5.4 |
| Example 6 | 4 | 15 | 12.8 | 0.7 | 5.7 |
| Example 7 | 4 | 15 | 12.7 | 0.7 | 6.1 |
| Example 8 | 4 | 30 | 10.7 | 0.8 | 5.4 |

As shown in Tables 1 to 3, it is possible to see that the thickness deviations are small in both of a direction perpendicular to the rolling direction and the rolling direction of a steel sheet in the Examples that satisfy the alloy component and manufacturing process conditions.

Comparative Example 1 to Comparative Example 6 are the kinds of steels including a large amount of Al and it is possible to see that the thickness deviations are large in both of the direction perpendicular to the rolling direction of a steel sheet and the rolling direction.

In Comparative Example 7 and Comparative Example 9, the number of times of acid pickling is small or large, so it is possible to see that the thickness deviations are large in the direction perpendicular to the rolling direction of a steel sheet or the rolling direction

In Comparative Example 8, the reduction ratio of the final pass in finish rolling is too large, so it is possible to see that the thickness deviations are large in the direction perpendicular to the rolling direction of a steel sheet or the rolling direction.

Experimental Example 2

The cold rolled plate manufactured in Example 1 was annealed at the temperatures shown in Table 1 to check the magnetic property after annealing of a cold rolled plate.

(Table 4)

| Cold rolled plate | Annealing temperature (°C) | Magnetic property | |
| --- | --- | --- | --- |
| | | Iron loss W15/50 (W/kg) | Magnetic flux density B50 (T) |
| Exa mple 3 | 960 | 3.08 | 1.75 |
| | 1000 | 3.04 | 1.74 |
| | 1040 | 2.92 | 1.74 |
| Exa mple 4 | 950 | 3.41 | 1.75 |
| | 980 | 3.17 | 1.73 |
| | 1010 | 3.04 | 1.73 |
| Exa mple 5 | 960 | 3.15 | 1.73 |
| | 990 | 3.07 | 1.72 |
| | 1020 | 2.96 | 1.72 |
| Exa mple 6 | 1000 | 2.87 | 1.68 |
| | 1020 | 2.65 | 1.67 |
| | 1040 | 2.55 | 1.67 |
| Exa mple 7 | 1000 | 2.94 | 1.69 |
| | 1020 | 2.85 | 1.68 |
| | 1040 | 2.74 | 1.67 |
| Exa mple 8 | 1000 | 3.01 | 1.70 |
| | 1020 | 2.82 | 1.68 |
| | 1040 | 2.70 | 1.67 |

As shown in Table 4, it is possible to see that the magnetic property of a non-oriented electrical steel sheet according to an exemplary embodiment of the present disclosure is improved through annealing of a cold rolled plate.

The present disclosure is not limited to the exemplary embodiments, but may be manufactured in a variety of different forms, and those of ordinary skill in the art to which the present disclosure pertains will understand that the present disclosure may be implemented in other specific forms without changing the technical spirit or essential features of the present disclosure. Therefore, it should be understood that the above-mentioned exemplary embodiments are exemplary in all aspects but are not limited thereto.

**Claims**

1.  A non-oriented electrical steel sheet comprising:

    by wt%, Si: 1.4 to 3%, Mn: 0.001 to 1.5%, and Al: 0.001 to 0.2%, with the remainder of Fe and inevitable impurities, wherein a thickness deviation that is generated in a direction perpendicular to a rolling direction is 1.5$\mu$m or less per length of 5mm, and a thickness deviation that is generated in the rolling direction is 10$\mu$m or less per length of 1000m.

2.  The non-oriented electrical steel sheet of claim 1, wherein:
    the following Formula 1 is satisfied.

[Formula 1]

$$1.1575 \times ([Si]+[Al]) - 1.6722 \leq [Mn] \leq 1.1575 \times ([Si]+[Al]) - 1.4722$$

(In Formula 1, [Si], [Al], and [Mn] means contents (wt%) of Si, Al, and Mn, respectively.)

3. The non-oriented electrical steel sheet of claim 1, further comprising:
one or more kinds of P: 0.1 wt% or less, C: 0.005 wt% or less, S: 0.01 wt% or less, N: 0.005 wt% or less, Ti: 0.005 wt% or less, and Sb: 0.001 to 0.08 wt%.

4. The non-oriented electrical steel sheet of claim 1, further comprising:
one or more kinds of Cr: 0.010 to 0.150 wt%, Sn: 0.003 to 0.080 wt%, and Cu: 0.01 to 0.20 wt%.

5. The non-oriented electrical steel sheet of claim 1, further comprising:
one or more kinds of Mo: 0.03 wt% or less, B: 0.0050 wt% or less, Ca: 0.0050 wt% or less, and Mg: 0.0050 wt% or less.

6. The non-oriented electrical steel sheet of claim 1, wherein:
a thickness of the steel sheet is 0.3 to 0.7mm.

7. A method for manufacturing a non-oriented electrical steel sheet, the method comprising:

manufacturing a hot rolled plate by hot-rolling a slab including, by wt%, Si: 1.4 to 3.0%, Mn: 0.001 to 1.5%, and Al: 0.001 to 0.2%, with the remainder of Fe and inevitable impurities;
acid-pickling the hot rolled plate two to four times; and
manufacturing a cold rolled plate by cold-rolling the acid-pickled hot rolled plate,
wherein the manufacturing of a hot rolled plate includes rough rolling of the slab and finish rolling, and
the finish rolling performs rolling through passes of a plurality of times and a reduction ratio of a final pass of the passes of a plurality of times is 17% or less.

8. The method of claim 7, further comprising:
heating the slab for 0.1 to 3 hours within a temperature range of 1100 to 1250°C before the manufacturing of a hot rolled plate.

9. The method of claim 7, wherein:
a reduction ratio of an initial pass of the passes of a plurality of times is 30% or more.

10. The method of claim 9, wherein:
a ratio of the reduction ratio of the initial pass to the reduction ratio of the final pass is 2.45 to 3.55 in the finish rolling.

11. The method of claim 7, wherein:
the finish rolling is performed at 850°C to 950°C.

12. The method of claim 7, wherein:
the manufacturing of a hot rolled plate further includes winding at a temperature of 800°C or lower after the finish rolling.

13. The method of claim 7, wherein:
the acid pickling is performed by immersing the hot rolled plate in a solution with hydrochloric acid of 3 to 22 wt% for 15 seconds to 200 seconds at each time.

14. The method of claim 7, further comprising:
removing an acid-pickling solution from a surface of the steel sheet between acid pickling in the acid pickling.

15. The method of claim 7, wherein:

the method is performed at a temperature of 300°C or lower until the manufacturing of a cold rolled plate is finished after the manufacturing of a hot rolled plate.

16. The method of claim 7, further comprising:
   annealing the cold rolled plate at 800 to 1070°C after the manufacturing of a cold rolled plate.

## INTERNATIONAL SEARCH REPORT

| International application No. |
|---|
| **PCT/KR2022/020903** |

### A. CLASSIFICATION OF SUBJECT MATTER

**C22C 38/02**(2006.01)i; **C22C 38/04**(2006.01)i; **C22C 38/06**(2006.01)i; **C22C 38/14**(2006.01)i; **C22C 38/00**(2006.01)i; **C22C 38/34**(2006.01)i; **C22C 38/12**(2006.01)i; **C21D 8/12**(2006.01)i; **H01F 1/147**(2006.01)i

According to International Patent Classification (IPC) or to both national classification and IPC

### B. FIELDS SEARCHED

Minimum documentation searched (classification system followed by classification symbols)

C22C 38/02(2006.01); C21D 8/12(2006.01); C21D 9/46(2006.01); C22C 38/00(2006.01); C23G 1/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성(non-oriented), 전기강판(electrical steel sheet), 두께편차(thickness deviation), 산세(pickling), 압하율(reduction ratio)

### C. DOCUMENTS CONSIDERED TO BE RELEVANT

| Category* | Citation of document, with indication, where appropriate, of the relevant passages | Relevant to claim No. |
|---|---|---|
| X | KR 10-2043525 B1 (POSCO) 12 November 2019 (2019-11-12)<br>See paragraphs [0127] and [0133], claims 1, 4, 6 and 13, table 5 and figure 3. | 1-6 |
| Y | | 7-16 |
| Y | JP 2018-003049 A (NIPPON STEEL & SUMITOMO METAL) 11 January 2018 (2018-01-11)<br>See paragraph [0046], claims 2-3 and table 5. | 7-16 |
| Y | KR 10-1130725 B1 (POSCO) 28 March 2012 (2012-03-28)<br>See claim 7. | 7-16 |
| A | WO 2019-132425 A1 (POSCO) 04 July 2019 (2019-07-04)<br>See claims 1 and 6. | 1-16 |
| A | KR 10-2045655 B1 (POSCO) 05 December 2019 (2019-12-05)<br>See claims 1, 5 and 7. | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2023** | **23 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/020903**

| Patent document cited in search report | | | Publication date (day/month/year) | Patent family member(s) | | | Publication date (day/month/year) |
|---|---|---|---|---|---|---|---|
| KR | 10-2043525 | B1 | 12 November 2019 | KR | 10-2019-0078345 | A | 04 July 2019 |
| | | | | WO | 2019-132426 | A1 | 04 July 2019 |
| JP | 2018-003049 | A | 11 January 2018 | JP | 6658338 | B2 | 04 March 2020 |
| KR | 10-1130725 | B1 | 28 March 2012 | CN | 100529115 | C | 19 August 2009 |
| | | | | CN | 101084322 | A | 05 December 2007 |
| | | | | EP | 1838882 | A1 | 03 October 2007 |
| | | | | JP | 2008-524449 | A | 10 July 2008 |
| | | | | JP | 4804478 | B2 | 02 November 2011 |
| | | | | KR | 10-0721818 | B1 | 28 May 2007 |
| | | | | KR | 10-0721864 | B1 | 28 May 2007 |
| | | | | KR | 10-0721865 | B1 | 28 May 2007 |
| | | | | KR | 10-0721926 | B1 | 28 May 2007 |
| | | | | KR | 10-2006-0070838 | A | 26 June 2006 |
| | | | | US | 2008-0121314 | A1 | 29 May 2008 |
| | | | | US | 7846271 | B2 | 07 December 2010 |
| | | | | WO | 2006-068399 | A1 | 29 June 2006 |
| WO | 2019-132425 | A1 | 04 July 2019 | KR | 10-2019-0078401 | A | 04 July 2019 |
| | | | | KR | 10-2045653 | B1 | 15 November 2019 |
| KR | 10-2045655 | B1 | 05 December 2019 | KR | 10-2019-0078408 | A | 04 July 2019 |
| | | | | WO | 2019-132420 | A1 | 04 July 2019 |

Form PCT/ISA/210 (patent family annex) (July 2022)